# EUROPÄISCHE PATENTANMELDUNG

(11) **EP 2 676 846 A1**
(43) Veröffentlichungstag der Anmeldung: **25.12.2013**
(21) Anmeldenummer: 12173122.8
(22) Anmeldetag: 22.06.2012
(51) Int. Cl.: B60R 11/00

(54) **Vorrichtung zum Lagern und Transportieren eines Reitsattels in einem Personenfahrzeug**

(71) Anmelder: Von Arx, Daniel, 6403 Küssnacht am Rigi (CH)
(72) Erfinder: Von Arx, Daniel, 6403 Küssnacht am Rigi (CH)
(74) Vertreter: AMMANN PATENTANWÄLTE AG BERN

(57) **Zusammenfassung**

Die Vorrichtung enthält eine Trageinheit (20) für den Reitsattel und eine Fixiereinheit (1) zum Befestigen der Vorrichtung an Kopfstützenstangen (19) einer Kopfstütze (18).

## Beschreibung

Die Erfindung betrifft eine Vorrichtung zum Lagern und Transportieren eines Reitsattels in einem Personenfahrzeug, enthaltend eine Trageinheit für den Reitsattel.

Reitsättel werden grundsätzlich immer hängend gelagert, weil sonst die Gefahr besteht, dass sie sich verziehen und in der Folge Druck- und Scheuerstellen beim Reittier verursachen. Besonders kritisch ist die Situation, wenn ein Sattel nach Gebrauch in feuchtem Zustand in einem Fahrzeug liegend gelagert und transportiert wird. Wenn der Sattel durch die liegende Lagerung auch nur leicht deformiert wird und in diesem Zustand trocknet, entsteht der gefürchtete Verzug, der die oben geschilderten Nachteile mit sich bringt.

Es sind fahrbare Sattelhalter bekannt, beispielsweise aus dem Dokument DE 10 2005 045 962 A1, mit denen Sättel und anderes Zubehör beispielsweise auf einem Turnierplatz aufbewahrt und transportiert werden können. Es ist denkbar, einen solchen Sattelhalter in einem Fahrzeug mitzuführen jedoch müsste dieser für die Fahrt gesichert werden, um zu verhindern, dass er sich während der Fahrt bewegt und dadurch eine erhebliche Gefahr bildet.

Ausgehend von diesem Stand der Technik liegt der Erfindung die Aufgabe zu Grunde, eine Vorrichtung der eingangs genannten Art anzugeben, die es gestattet, einen Reitsattel hängend in eine Personenfahrzeug zu transportieren, wobei die Trageinheit im Fahrzeug gesichert ist.

Diese Aufgabe wird erfindungsgemäss dadurch gelöst, dass die Vorrichtung eine Fixiereinheit zum Befestigen der Vorrichtung an Kopfstützenstangen des Personenfahrzeugs aufweist.

Unter dem Begriff Kopfstützenstangen sollen im vorliegenden Zusammenhang Teile verstanden werden, welche eine gepolsterte Kopfstütze in einem Abstand über der Rücklehne eines Fahrzeugsitzes halten.

Diese erfindungsgemässe Lösung hat insbesondere den Vorteil, dass die Vorrichtung in praktisch jedem Personenfahrzeug sicher angeordnet werden kann, weil heutzutage jedes Personenfahrzeug mit Kopfstützen ausgerüstet ist.

Nach einer Ausführungsart der Erfindung ist die Trageinheit zwischen einer im Wesentlichen horizontalen Gebrauchslage und einer im Wesentlichen vertikalen Nichtgebrauchslage gegenüber der Fixiereinheit um eine Schwenkachse verschwenkbar. Somit kann die Trageinheit bei Nichtgebrauch platzsparend herunter geklappt werden, ohne dass die gesamte Vorrichtung von den Kopfstützenstangen abgenommen werden muss.

Eine weitere Ausführungsart sieht vor, dass die Fixiereinheit eine Tragplatte mit einem quer zur Trageinheit orientierten, einseitig offenen Schlitz zur Aufnahme der Kopfstützenstangen aufweist. Dies erlaubt eine sehr einfache Montage der Vorrichtung, indem die Tragplatte wie eine Gabel seitlich über die vorhandenen Kopfstützenstangen geschoben wird.

Wenn nach einer weiteren Ausführungsart die Fixiereinheit eine quer zum Schlitz verschiebbare Schiebeplatte mit einem Schliessansatz zum Verschliessen des offenen Endes des Schlitzes aufweist, wird dadurch die Vorrichtung gegen ein unbeabsichtigtes Entfernen von den Kopfstützenstangen gesichert.

Gemäss einer zusätzlichen Ausführungsart weist die Schiebeplatte einen Betätigungsteil auf und es sind Feststellmittel zum Arretieren der Schiebeplatte gegenüber der Tragplatte vorhanden. Der Betätigungsteil erleichtert das Montieren und Demontieren der Vorrichtung am Fahrzeugsitz und die Arretiermittel erhöhen die Sicherheit gegen unbeabsichtigtes Lösen der Vorrichtung vom Fahrzeugsitz.

Gemäss einer anderen Ausführungsart weist die Tragplatte mindestens eine abgewinkelte Lasche auf, welche die Schwenkachse trägt. Diese Lösung ist konstruktiv besonders einfach.

Nach weiteren Ausführungsarten umfasst die Trageinheit einen langgestreckten Träger, der in einem Endbereich mittels der Schwenkachse mit der Fixiereinheit schwenkbar verbunden ist und die Trageinheit ist mit einem Polster für die Auflage des Sattels ausgestattet. Dies erlaubt eine gute, sichere und schonende Auflage des Sattels auf der Trageinheit. Zudem ist das Polster bevorzugt abnehmbar an der Trageinheit befestigt, besonders bevorzugt mittels eines Klettverschlusses, derart, dass das Polster beispielsweise zwecks Reinigung einfach abgenommen und danach wieder angebracht werden kann.

Andere Ausführungsarten sehen vor, dass an der Trageinheit in einem Abstand von der Schwenkachse eine Stütze angeordnet ist, die dazu bestimmt ist, die Trageinheit in Gebrauchslage an der Rücklehne des Personenfahrzeuges abzustützen. Besonders vorteilhaft ist die Stütze um eine weitere Schwenkachse schwenkbar am Träger angeordnet und im Träger ist ein Anschlag zum Begrenzen des Schwenkbereichs der Stütze angeordnet. Die Stütze erlaubt in einfacher Weise, die Trageinheit in Gebrauchslage am Fahrzeugsitz zu halten und der Anschlag verhindert ein Abrutschen des Stütze entlang der Rücklehne des Fahrzeugsitzes.

Die Vorrichtung ist in der Nichtgebrauchslage besonders platzsparend, wenn nach einer weiteren Ausführungsart der Träger U-förmig ist und die Stütze in eingeklapptem Zustand vollständig zwischen den U-Schenkeln aufnimmt.

Damit die Vorrichtung an unterschiedliche Neigungswinkel der Rücklehne angepasst werden und beispielsweise auch vorne über der Sitzfläche des Fahrzeugsitzes montiert werden kann, ist gemäss einer weiteren Ausführungsart vorgesehen, dass die Stütze aus mindestens zwei teleskopisch ineinander Verschiebbaren Teilen besteht und Mittel zum gegenseitigen Feststellen der Teile aufweist. Somit ist die Stütze längenverstellbar.

Schliesslich ist nach einer weiteren Ausführungsart am freien Ende der Stütze ein Abstützteil für den Kontakt mit der Rücklehne angeordnet, wodurch Beschädigungen der Rücklehne durch die Stütze vermieden werden.

Ein Ausführungsbeispiel der Erfindung wird nachstehend unter Bezugnahme auf die angefügten Zeichnungen beispielsweise näher beschrieben. Es zeigt
- Figur 1: eine perspektivische Ansicht einer erfindungsgemässen Vorrichtung in Gebrauchslage;
- Figur 2: eine Schnittansicht der Vorrichtung gemäss Figur 1 in Nichtgebrauchslage und
- Figur 3: einen Ausschnitt aus Figur 1 in einer anderen perspektivischen Ansicht.

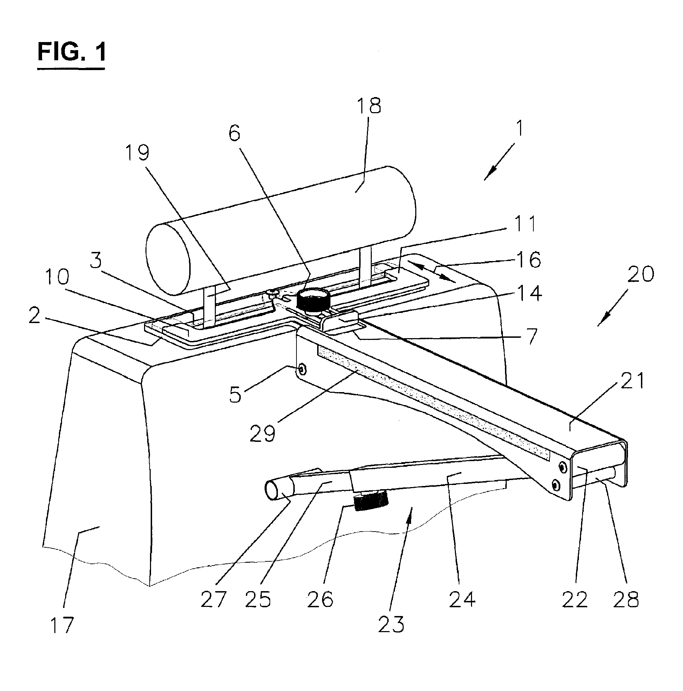

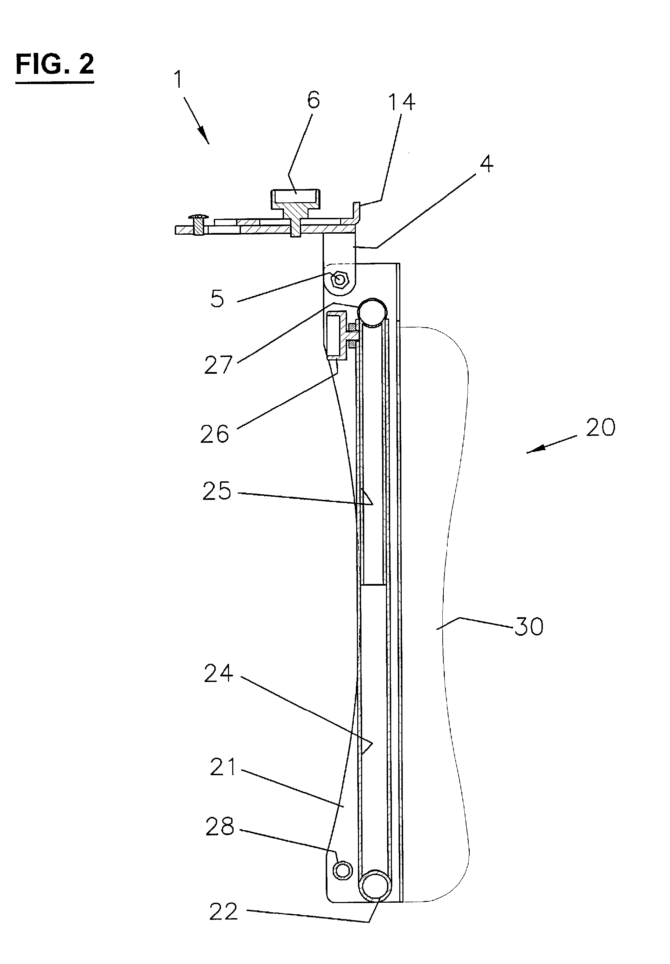

Figur 1 zeigt in einer perspektivischen Ansicht ein Ausführungsbeispiel der erfindungsgemässen Vorrichtung, die gebrauchsbereit an der Rücklehne 17 eines Fahrzeugsitzes angeordnet ist. Die Vorrichtung besteht im Wesentlichen aus einer Trageinheit 20, auf die ein Reitsattel auflegbar ist und einer Fixiereinheit 1, die zur Befestigung der Vorrichtung an den eine Kopfstütze 18 tragenden Kopfstützenstangen 19 dient. Die Trageinheit 20 und die Fixiereinheit 1 sind um eine Schwenkachse 5 gegeneinander verschwenkbar, damit die Trageinheit 20 bei Nichtgebrauch platzsparend heruntergeklappt werden kann. Figur 2 zeigt die Vorrichtung in der Nichtgebrauchslage.

Die Fixiereinheit 1 enthält eine Tragplatte 2 mit einem Schlitz 3 zur Aufnahme der Kopfstützenstangen 19. Der Schlitz 3 ist rechts in Figur 1 offen, so dass die Tragplatte 2 seitlich von links angebracht werden kann, ohne die Kopfstütze 18 zu entfernen. Eine Schiebeplatte 10 ist in Richtung des Doppelpfeils 16 verschiebbar auf der Tragplatte 2 gelagert. Die Schiebeplatte 10 weist seitlich einen Schliessansatz 11 auf, der in einer Endlage der Schiebeplatte 10 das offene Ende des Schlitzes 3 in der Tragplatte 2 überdeckt, so dass die Vorrichtung an den Kopfstützenstangen 19 gesichert ist. Zur Verschiebung der Schiebeplatte 10 weist diese einen nach oben abgewinkelten Betätigungsteil 14 auf und zur Arretierung der Schiebeplatte 10 ist eine Feststellschraube 6 vorhanden. Es könnten auch andere Mittel zur Arretierung der Schiebeplatte 10 gegenüber der Tragplatte 2 vorhanden sein, beispielsweise Rastmittel wie Kugelrastmittel.

Die Trageinheit 20 umfasst einen U-förmigen Träger 21, der mittels der genannten Schwenkachse 5 an zwei nach unten abgewinkelten Laschen 4 der Tragplatte 2 schwenkbar befestigt ist. Eine Ausnehmung 7 im Träger 21 gewährleistet die Beweglichkeit des Betätigungsteils 14. Weiter umfasst die Trageinheit 20 eine Teleskopstütze 23, die sich in Gebrauchslage, wie in Figur 1 dargestellt, an der Rücklehne 17 des Fahrzeugsitzes abstützt und den Träger 21 in etwa horizontaler Lage hält. Die Teleskopstütze 23 besteht aus einem Vierkantrohr 24, das um eine Schwenkachse 22 schwenkbar im Träger 21 gelagert ist und an seinem freien Ende einen Stützstab 25 teleskopisch verschiebbar aufnimmt, der ebenfalls als Vierkantrohr ausgebildet sein kann. Selbstverständlich können die Teile 24 und 25 auch andere Querschnitte haben. Am freien Ende des Stützstabes 25 ist ein Abstützteil 27 für die Anlage an der Rücklehne 17 angeordnet. Der Abstützteil 27 kann auch anders ausgebildet sein, als dargestellt, beispielsweise als Platte. Mit einer Feststellschraube 26 ist der Stützstab 25 im Vierkantrohr 24 arretierbar und ein im Träger 21 befestigter Anschlagbolzen 28 begrenzt den Schwenkwinkel der Teleskopstütze 23. Seitlich am Träger 21 ist in Klettband 29 befestigt, mit dessen Hilfe ein auf die Oberseite des Trägers 21 aufsetzbares Polster für einen Reitsattel abnehmbar fixiert werden kann. Das Polster ist in Figur 2 mit einer feinen Linie angedeutet und mit der Bezugszahl 30 versehen.

In Figur 2 ist die Vorrichtung in Nichtgebrauchslage dargestellt, in welcher die Trageinheit 20 an der Rücklehne hinunterhängt und so nur sehr wenig Platz im Fahrzeug beansprucht. In dieser Nichtgebrauchslage ist die Teleskopstütze 23 eingeklappt und vollständig im Träger 21 zwischen dessen U-Schenkeln aufgenommen.

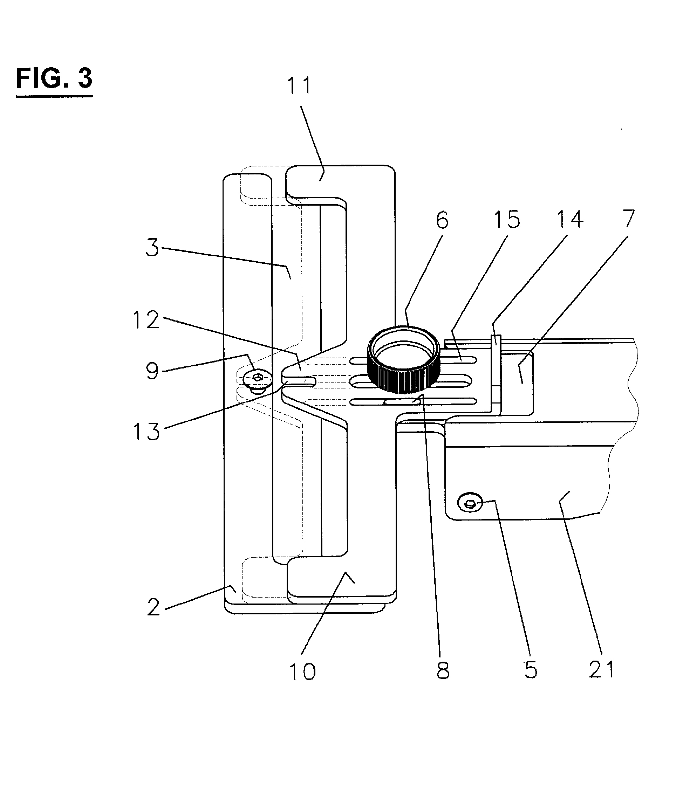

Figur 3 zeigt in einer gegenüber Figur 1 vergrösserten Darstellung die Fixiereinheit 1. Die Schiebeplatte 10 hat zwei Führungsschlitze 15, in die jeweils ein von der Tragplatte 2 nach oben ragender Führungsnocken 8 eingreift. Ausserdem ist an der Schiebeplatte 10 ein Zentrieransatz 12 mit einer Ausnehmung 13 angeordnet, die in der Schliesslage der Schiebeplatte 10 einen auf der Tragplatte 2 angeordneten Zentrierbolzen 9 aufnimmt. Die Schliesslage ist in dieser Figur und auch in Figur 1 strichliert dargestellt

Die Vorrichtung mit Ausnahme des Polsters 30 ist vorzugsweise aus Metall hergestellt, beispielsweise aus Aluminium oder aus vorzugsweise nichtrostendem Stahl. Es ist aber auch denkbar, Teile der Vorrichtung aus Kunststoff herzustellen.

### Bezugszeichenliste

- 1: Fixiereinheit
- 2: Tragplatte
- 3: Schlitz
- 4: Lasche
- 5: Schwenkachse
- 6: Feststellschraube
- 7: Ausnehmung
- 8: Führungsnocken
- 9: Zentrierbolzen
- 10: Schiebeplatte
- 11: Schliessansatz
- 12: Zentrieransatz
- 13: Ausnehmung
- 14: Betätigungsteil
- 15: Führungsschlitz
- 16: Doppelpfeil
- 17: Rücklehne
- 18: Kopfstütze
- 19: Kopfstützenstange
- 20: Trageinheit
- 21: Träger
- 22: Schwenkachse
- 23: Teleskopstütze
- 24: Vierkantrohr
- 25: Stützstab
- 26: Feststellschraube
- 27: Abstützteil
- 28: Anschlagbolzen
- 29: Klettband
- 30: Polster

## Patentansprüche

**1.** Vorrichtung zum Lagern und Transportieren eines Reitsattels in einem Personenfahrzeug, enthaltend eine Trageinheit (20) für den Reitsattel, **dadurch gekennzeichnet, dass** die Vorrichtung eine Fixiereinheit (1) zum Befestigen der Vorrichtung an Kopfstützenstangen (19) des Personenfahrzeugs aufweist.

**2.** Vorrichtung nach Anspruch 1, **dadurch gekennzeichnet, dass** die Trageinheit (20) zwischen einer im Wesentlichen horizontalen Gebrauchslage und einer im Wesentlichen vertikalen Nichtgebrauchslage gegenüber der Fixiereinheit (1) um eine Schwenkachse (5) verschwenkbar ist.

**3.** Vorrichtung nach einem der vorangehenden Ansprüche, **dadurch gekennzeichnet, dass** die Fixiereinheit (1) eine Tragplatte (2) mit einem quer zur Trageinheit (20) orientierten, einseitig offenen Schlitz (3) zur Aufnahme der Kopfstützenstangen (19) aufweist.

**4.** Vorrichtung nach Anspruch 3, **dadurch gekennzeichnet, dass** die Fixiereinheit (1) eine quer zum Schlitz (3) verschiebbare Schiebeplatte (10) mit einem Schliessansatz (11) zum Verschliessen des offenen Endes des Schlitzes (3) aufweist.

**6.** Vorrichtung nach einem der Ansprüche 2 bis 5, **dadurch gekennzeichnet, dass** die Tragplatte (2) mindestens eine abgewinkelte Lasche (4) aufweist, welche die Schwenkachse (5) trägt.

**7.** Vorrichtung nach einem der Ansprüche 2 bis 6, **dadurch gekennzeichnet, dass** die Trageinheit (20) einen langgestreckten Träger (21) umfasst, der in einem Endbereich mittels der Schwenkachse (5) mit der Fixiereinheit (1) schwenkbar verbunden ist.

**8.** Vorrichtung nach einem der vorangehenden Ansprüche, **dadurch gekennzeichnet, dass** die Trageinheit (20) mit einem Polster (30) für die Auflage des Sattels ausgestattet ist.

**9.** Vorrichtung nach Anspruch 8, **dadurch gekennzeichnet, dass** das Polster (30) abnehmbar an der Trageinheit (20) befestigt ist, vorzugsweise mittels eines Klettverschlusses (29).

**10.** Vorrichtung nach einem der Ansprüche 2 bis 9, **dadurch gekennzeichnet, dass** an der Trageinheit (20) in einem Abstand von der Schwenkachse (5) eine Stütze (23) angeordnet ist, die dazu bestimmt ist, die Trageinheit (20) in Gebrauchslage an der Rücklehne des Personenfahrzeuges abzustützen.

**11.** Vorrichtung nach Anspruch 10, **dadurch gekennzeichnet, dass** die Stütze um eine weitere Schwenkachse (22) schwenkbar am Träger (21) angeordnet ist.

**12.** Vorrichtung nach Anspruch 11, **dadurch gekennzeichnet, dass** im Träger (21) ein Anschlag (28) zum Begrenzen des Schwenkbereichs der Stütze (23) angeordnet ist.

**13.** Vorrichtung nach einem der Ansprüche 10 bis 12, **dadurch gekennzeichnet, dass** der Träger (21) U-förmig ist und die Stütze (23) in eingeklapptem Zustand vollständig zwischen den U-Schenkeln aufnimmt.

**14.** Vorrichtung nach einem der Ansprüche 10 bis 13, **dadurch gekennzeichnet, dass** die Stütze (23) aus mindestens zwei teleskopisch ineinander Verschiebbaren Teilen (24, 25) besteht und Mittel (26) zum gegenseitigen Feststellen der Teile (24, 25) aufweist.

**15.** Vorrichtung nach einem der Ansprüche 10 bis 14, **dadurch gekennzeichnet, dass** am freien Ende der Stütze (23) ein Abstützteil (27) für den Kontakt mit der Rücklehne angeordnet ist.
